# EUROPEAN PATENT SPECIFICATION

(11) **EP 1 896 302 B1**
(45) Date of publication and mention of the grant of the patent: **15.07.2009**
(21) Application number: 06744260.8
(22) Date of filing: 16.06.2006
(51) Int. Cl.: B60R 22/48

(54) **BELT TENSION INDICATOR**
GURTSPANNANZEIGE
INDICATEUR DE TENSION DE COURROIE

(30) Priority: 16.06.2005 GB 0512273; 25.08.2005 GB 0517392
(43) Date of publication of application: 12.03.2008
(73) Proprietor: Britax Excelsior Limited, Hampshire SP10 3UW (GB)
(72) Inventor: CARINE, David Shaun, Nr Andover, Hampshire SP11 6DF (GB); HOLLAND, Jan, Birmingham B3 1QS (GB); WRIGHT, Anthony, Birmingham B3 1QS (GB)
(74) Representative: Bosch, Matthias
(86) International application number: PCT/GB2006/002242
(87) International publication number: WO 2006/134393

(56) References cited:
- WO-A-20/06059114
- DE-A1- 3 727 929
- US-A1- 2005 040 960

## Description

The present invention relates to a tension indicator, and in particular to a tension indicator suitable for indicating the tension in a strap or belt.

The invention will have a number of applications in respect of automotive child restraint systems but it will be understood that the invention will be equally suited to other applications where an indication of the tension in a strap or belt is required, particularly where the existence of tension or slack is required to be readily ascertained.

In the case of automotive child restraints, it is typical for belts or straps to be used for occupant harnesses in a child seat or for securing the child seat with respect to the motor vehicle. For example, it is common to use restraining straps extending from the head end of a child restraint to an anchorage point within the vehicle.

In respect of each of these applications harnesses and tether straps should not be slack, and adequate tension must be applied to the straps to ensure safe operation of the restraint.

At present, the correct tension in these belts or straps is achieved by manual adjustment. They are adjusted until it is felt that adequate tension has been applied.

However, there are problems associated with ensuring the correct tension in such belts and straps during use. It is possible for them to become loose during use, or for inadequate tension to be applied at the time of their adjustment.

US2005/0040960 describes a seat belt tension indicator for determining whether the seat belt tension is within a desired range. There are described various arrangements where a belt passes around a series of rollers or through a plate, whereby a change in tension in the belt results in movement of the rollers or plate which in turn results in a visual or audible signal.

W02006/059114 describes a seat belt tension indicator in the form of a shoulder pad body corresponding to the preamble of claim 1, where the belt passes over a biasing member which is deflectable between different states due to tension in the belt, to thereby indicate levels of belt tension.

According to an aspect of the present invention there is provided a tension indicator for a strap, the indicator having a first part adapted to be carried with respect to said strap, a second part moveably secured to said first part, characterized by strap attachment means on said second part, wherein a loop of said strap is secured to said attachment means so that when tension is applied to said strap, said loop in turn pulls on said strap attachment means and causes said second part to move with respect to said first part in a first direction, and biasing means acting between said first and second parts to force apart said first and second parts in a direction opposite to said first direction so that the position of said second part provides an indication of the tension in said strap.

The loop can be formed in the portion of strap which locates through the tension indicator so that any tension applied to the strap tends to shorten or straighten out the loop. This movement of the loop can be used to cause movement of the second part through attachment of the loop with respect to the second part.

Preferably, the second part is pivotally attached to the first part so that movement of the loop causes rotation of the second part with respect to the first. However, the invention would equally function if the second part were slidably attached with respect to the first part so that' movement of the end of the loop caused sliding movement of the second part with respect to the first.

Preferably, the second part is pivotally mounted on the first part. This provides a compact and reliable manner for the second part to be movable with respect to the first part.

Conveniently, the strap attachment means comprises a cross bar element. The cross bar element may be a continuous member or may be discontinuous to allow retro-fitting of the tension indicator on an existing closed loop belt.

The strap attachment element may be provided at a distance in the range of 10 to 60 mm from the point of attachment of the second part to the first part. More preferably the strap attachment element may be provided at a distance in the range of 25 to 35 mm from the point of attachment of the second part to the first part. This distance provides a suitable force moment against the opening bias applied to the second part.

A stopper element may be provided for limiting the extent of movement of the second part from the first part. This ensures movement of the second part 12 will be initiated with less force than may be required from a more inclined position.

Preferably, the second part is pivotally mounted on the first part and the stopper element restricts the angle of deflection of the second part from the first part to between 120-130 degrees. In this regard, the maximum permitted angle of deflection of the second part from the first part may be set at 125 degrees.

Conveniently, the first part has a substantially planar form. This ensures the tension indicator is maintained compact, and does not present a large object for a child's head to impact upon in the event of a sudden deceleration.

The first part may be recessed to receive the second part. This again improves the compactness of the tension indicator.

Preferably, the second part is movably mounted with respect to the first part between open and closed positions. Conveniently, the second part is movable so as to be substantially flush with the first part in a closed position and projecting from the first part in an open position.

Preferably, the first part of the tension indicator comprises a substantially rectangular planar body, the second part being pivotally mounted at one end thereof, the second part being foldable into the first part, when sufficient tension is afforded to the strap threaded through the indicator.

The first part may have separate apertures defining entry and exit points for the strap therethrough, and a base member may be provided between said apertures for receiving loading from a strap acting thereon.

Conveniently, in the closed position of the indicator, the strap attachment means is positioned in substantially the same plane as said entry and exit point apertures of the first part. This ensures that the strap is as un-diverted as possible from its normal path and hence works effectively as if no tension indicator were present. Moreover, even if elements of the tension indicator fail in the event of an accident then no or negligible slack will be introduced.

Preferably, the first part is slidably engaged with respect to the strap and has an opening through which a loop or strap can be drawn. By being slidably attached to the strap the tension indicator can be positioned as required. However, the invention will still equally operate should the first part be fixed with respect to a portion of the strap, provided that a loop of the strap can be attached to the strap attachment means.

Preferably, the biasing means comprises a spring, and in respect of pivotal attachment of the second part to the first part, a torsion spring may be used.

In the case of a pivoting second part, the strap attachment means is positioned with respect to the second part so that the desired turning force is created with respect to the pivot to readily move the second part upon tension being applied to the strap.

The strap attachment means may be a component integrally moulded with respect to the second part or it may be a further component that is secured with respect to the second part to cause movement of both components upon tension being applied to the strap.

In order to fully understand the invention, a preferred embodiment will now be described. However, it will be realized that the invention is not to be limited to the features of the preferred embodiment and that variations and alternatives apparent to the skilled addressee will be included within the scope of the invention.

Examples of the present invention will now be described with reference to the accompanying drawings, in which:-

Figure 1 shows a perspective view of a tension indicator shown with no or little tension applied to the belt;

Figure 2 shows a perspective view of the tension indicator shown in Figure 1 with sufficient tension applied to the belt;

Figure 3 is a cross-sectional view of a tension indicator shown in Figure 1 where there is no tension in the strap;

Figure 4 is the cross-sectional view of a tension indicator as seen in Figure 3, but with tension applied to the strap;

Figure 5 shows a perspective view of the tension indicator shown in Figures 1 to 4 in an open position;

Figure 6 shows the tension indicator of Figures 1 to 5 in the closed position;

Figure 7 is a cross-sectional view of a tension indicator according to a further embodiment where there is no tension in the strap; and

Figure 8 is the cross-sectional view of a tension indicator as seen in Figure 3, but with tension applied to the strap.

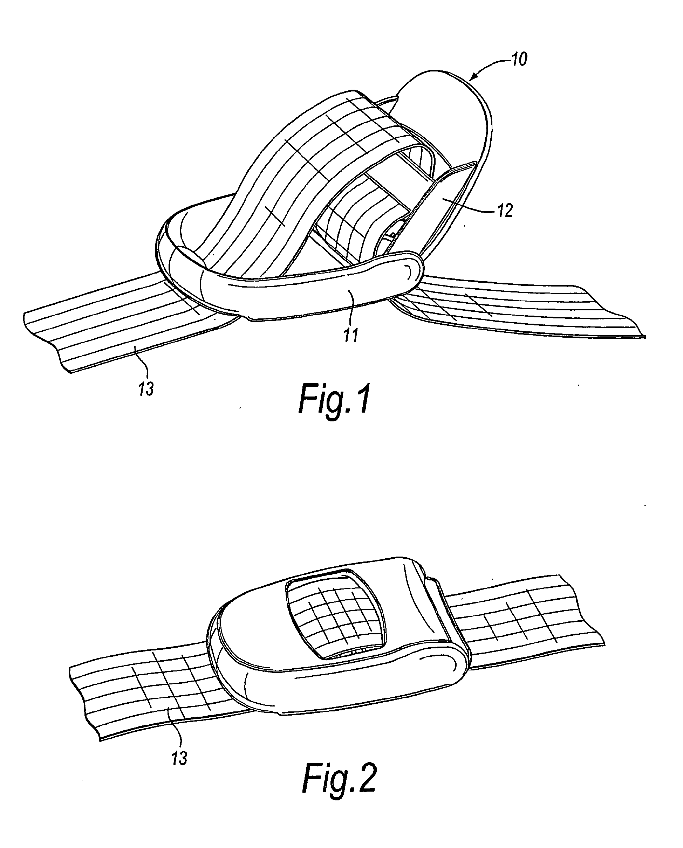

Referring to Figures 1 to 5, the tension indicator 10 comprises a first part 11 and a pivotally attached second part 12. A strap 13 is feed through the tension indicator and as shown in Figure 1, the strap 13 has no or little tension applied to it. The strap enters and leaves the first part 11 by way of apertures 5 and 16.

A loop 17 of the strap is thus formed and can be drawn through openings 5 and 16 in the first part 11. The loop is then attached (as described in more detail below) to the second part 12. While there is no tension in the strap 13, the loop 17 will remain in the position as shown in Figure 1. However, tension applied to the strap 13 will result in shortening and flattening of the loop 17, as shown in Figure 2.

The second part 12 is attached to the first part 11 by way of a pivot 19. The pivotal connection comprises a pin and a spring member (not shown).

Rotation of the second part 12 with respect to the first part 11 from an open position as shown in Figure 1 to a closed position as shown in Figure 2, is resisted by the torsional action of the spring member in pivot 19. The extent to which the second part can be opened is limited by a stopper 15 formed on the rear end of the first part which engages with against an outer portion of the second part.

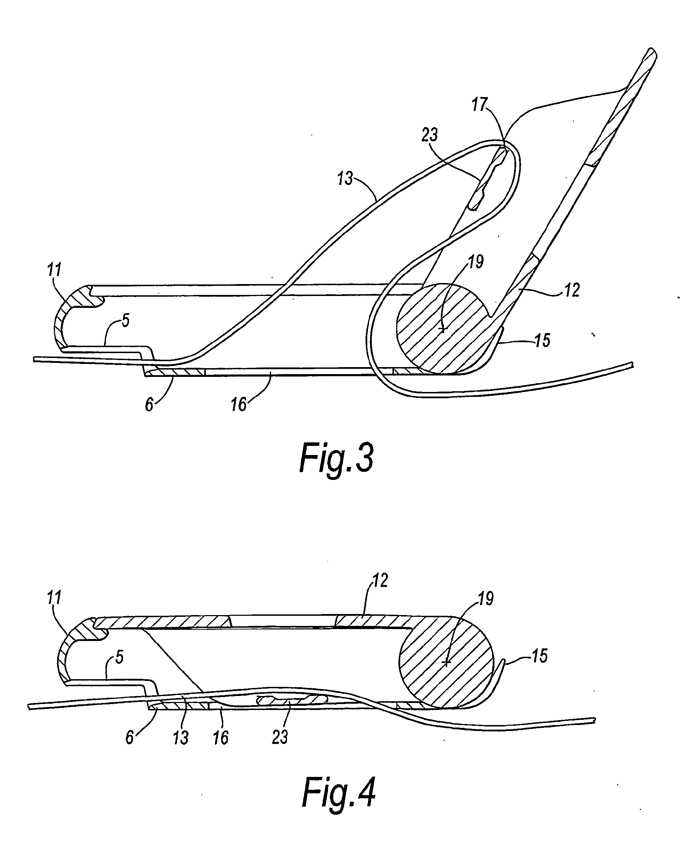

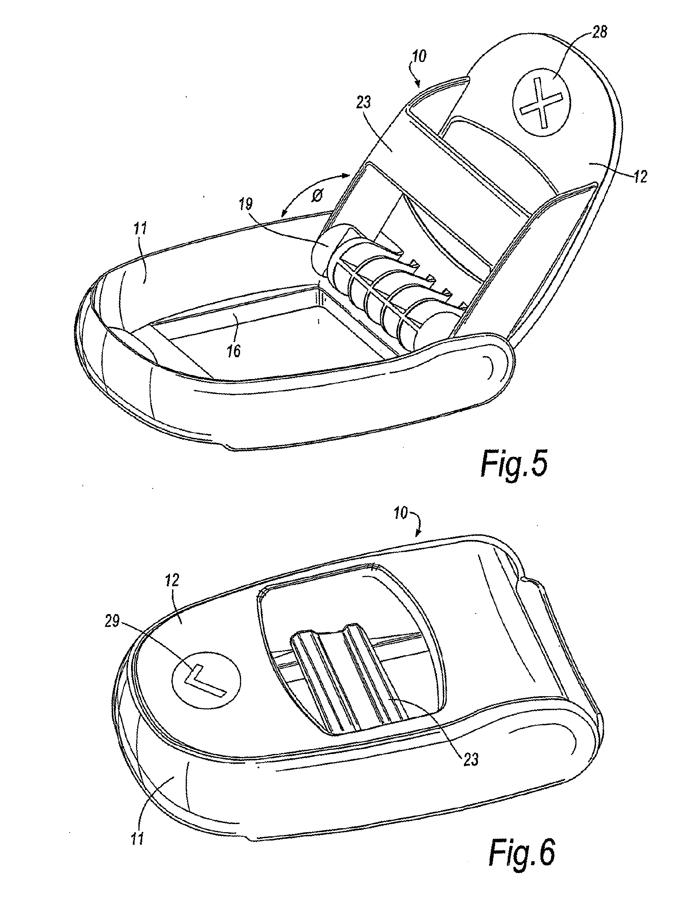

In this regard, the maximum permitted deflection "ϕ" of the second part is between 120 and 130°, more particularly 125°, as shown in Figures 3 and 5. Limiting the extent of rotation in this way, improves the mechanical advantage for movement of the second part 12 by the loop 17. It means that movement of the second part 12 will be initiated with less force than may be required from a horizontal position, if the second part were allowed to open further.

As seen in the cross sectional views of Figures 3 and 4, a cross bar member 23 projects transversely across the second member and acts to engage in the loop 17 of the strap. The cross bar member may be provided at a distance in the range of 10 to 60 mm from the point of attachment of the second part to the first part. More preferably the cross bar member is provided at a distance in the range of 25 to 35 mm from the point of attachment of the second part to the first part.

When tension is applied to the strap 13, the loop 17 is caused to shorten and therefore applies a force to the second part 12 which tends to rotate the second part towards the first part 11. Therefore, when sufficient tension is applied, the tension indicator 10 changes from the open position shown in Figure 3 to the closed position shown in Figures 4 and 6. The cross bar member may be continuos as shown or may have a slot or aperture, or have one side open so that the tension indicator can be retro-fitted to an existing belt. Similarly, the first part base member 6 may have a slot or aperture for this purpose.

As seen in Figure 1, the lack of tension in the strap 13 is shown by the tension indicator 10 being in its open position. This position can be further flagged by an additional visual feature such as the cross 28 which may also be coloured red.

Intermediate tension will result in the second part 12 rotating partly toward the first part 11. Ideally, adequate tension is indicated once the tension indicator 10 reaches the closed position as shown in Figure 6. This position is further emphasized by a visual indicator such as a tick 29 which may also be coloured green. The rotation of the second part 12 towards the first part 11 is resisted by the spring member. When there is no tension in the strap 13, then the spring member returns the second part 12 to its open position as shown in Figure 1.

Both the first and second parts 11 and 12 are preferably moulded components with the second part 12 being moulded from soft resilient material. One possible material is TPE rubber. Flexibility of, the second part 12 will help to prevent any pinching injury and reduce the likelihood if impact injury should the child come into contact therewith in the event of a sudden deceleration.

The biasing means may comprise other forms, such as resilient moulded fingers which resist closure of the second part 12 and provide the necessary opening force when the strap 13 is slack.

Although the tension indicator 10 shown in the accompanying drawings is designed to slide along the strap 13 so as to position it advantageously, it would be possible for the tension indicator 10 to be fixed with respect to a certain location on a strap 13. It may for example be desirable for the tension indicator 10 to be movable in respect of shoulder harness straps, but it may be adequate for the tension indicator 10 to be fixed in respect of tether straps.

Clearly, the invention will provide a clear visual indication of tension conditions within strap 13. The tension indicator 10 will clearly show when there is insufficient tension within the strap 13 and can be designed so that the required tension within the strap is clearly indicated when the tension indicator 10 is fully closed.

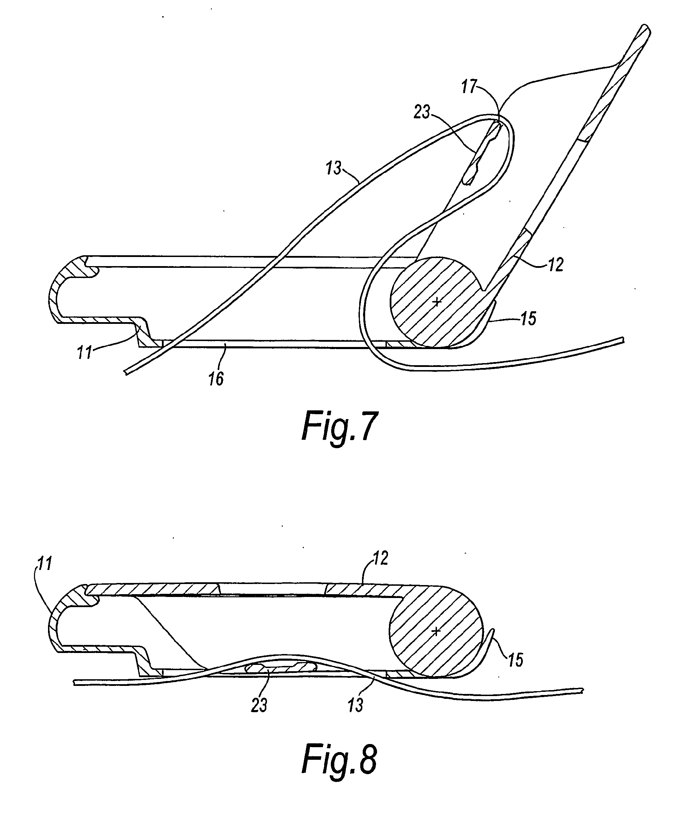

As shown in Figures 3 and 4, the strap follows a path which includes it passing over a first part base member 6 provided at a lower portion of the first part. When correctly tensioned, the strap will urge this first part base member onto the child (or other object) being tensioned to stabilize the tension indicator. An alternative embodiment is however envisaged as shown in Figure 7 and 8, where the loop 17 of strap is simply pulled through the aperture 16 in the base of the first part.

## Claims

1. A tension indicator for a strap (13), the indicator having a first part (11) adapted to be carried with respect to said strap, a second part (12) moveably secured to said first part, **characterized by** strap attachment means (23) on said second part, wherein a loop (17) of said strap can be secured to said attachment means so that when tension is applied to said strap, said loop in turn pulls on said strap attachment means and causes said second part to move with respect to said first part in a first direction, and biasing means acting between said first and second parts to force apart said first and second parts in a direction opposite to said first direction so that the position of said second part provides an indication of the tension in said strap.

2. A tension indicator according to claim 1, wherein the second part (12) is pivotally mounted to the first part (11).

3. A tension indicator according to claim 1 or 2, wherein strap attachment means (23) comprises a cross bar element.

4. A tension indicator according to any one of claims 1 to 3, wherein the strap attachment means (23) is provided at a distance in the range of 10 mm to 60 mm from the point of attachment of the second part (12) to the first part (11).

5. A tension indicator according to any preceding claim; further comprising a stopper element (15) for limiting the extent of movement of the second part (12) from the first part (11).

6. A tension indicator according to claim 5, wherein the second part (12) is pivotally mounted on the first part (11) and the stopper element (15) restricts the angle of deflection of the second part from the first part to between 120-130 degrees.

7. A tension indicator according to claim 6, wherein maximum permitted angle of deflection of the second part (12) from the first part (11) is 125 degrees.

8. A tension indicator according to any preceding claim, wherein the first part (11) has a substantially planar form.

9. A tension indicator according to any preceding claim, wherein the first part (11) is recessed to receive the second part (12).

10. A tension indicator according to any preceding claim, wherein the second part (12) is movably mounted with respect to the first part (11) between open and closed positions.

11. A tension indicator according to claim 10, wherein the second part (12) is movable so as to be substantially flush with the first part (11) in said closed position and to be projecting from the first part in said open position.

12. A tension indicator according to any preceding claim, wherein the first part (11) comprises a substantially rectangular planar body, the second part (12) being pivotally mounted at one end thereof, the second part being foldable into the first part, when sufficient tension is afforded to the strap threaded through the indicator.

13. A tension indicator according to any preceding claim, wherein the first part (11) has separate apertures (5, 16) defining entry and exit points for the strap therethrough, a base member (6) being provided between said apertures for receiving loading from a strap acting thereon.

14. A tension indicator according to claim 13, wherein in the closed position, the strap attachment means (23) is positioned in substantially the same plane as said strap exit/entry aperture or apertures (5, 16) of the first part (11).

15. A tension indicator according to claim 14, wherein said biasing means is a spring.

## Patentansprüche

1. Anzeigevorrichtung für die Spannung eines Gurtes (13), wobei die Anzeigevorrichtung einen ersten Bestandteil (11) aufweist, der geeignet ist, vom Gurt getragen zu werden, einen zweiten Bestandteil (12), der beweglich am ersten Bestandteil befestigt ist, **dadurch gekennzeichnet, dass** ein Gurtbefestigungsmittel (23) am zweiten Bestandteil vorgesehen ist, wobei eine Schlaufe (17) des Gurtes am Gurtbefestigungsmittel befestigbar ist, so dass, wenn Spannung auf den Gurt aufgebracht wird, die Schlaufe wiederum am Gurtbefestigungsmittel zieht und den zweiten Bestandteil veranlasst, sich in Bezug auf den ersten Bestandteil in eine erste Richtung zu bewegen, und ein zwischen dem ersten und zweiten Bestandteil wirkendes Zwangsmittel, um den ersten und zweiten Bestandteil in einer der ersten Richtung entgegengesetzten Richtung auseinander zu treiben, so dass die Stellung des zweiten Bestandteils eine Anzeige der Spannung im Gurt liefert.

2. Anzeigevorrichtung für die Spannung gemäß Anspruch 1, wobei der zweite Bestandteil (12) drehbar auf dem ersten Bestandteil (11) angebracht ist.

3. Anzeigevorrichtung für die Spannung gemäß Anspruch 1 oder 2, wobei das Gurtbefestigungsmittel (23) ein Querriegelelement beinhaltet.

4. Anzeigevorrichtung für die Spannung gemäß einem der Ansprüche 1 bis 3, wobei das Gurtbefestigungsmittel (23) in einem Abstand zwischen 10 mm und 60 mm vom Befestigungspunkt des zweiten Bestandteils (12) am ersten Bestandteil (11) angebracht ist.

5. Anzeigevorrichtung für die Spannung gemäß einem der vorhergehenden Ansprüche, zusätzlich ein Stoppelement (15) zur Begrenzung des Ausmaßes der Bewegung des zweiten Bestandteils (12) vom ersten Bestandteil (11) umfassend.

6. Anzeigevorrichtung für die Spannung gemäß Anspruch 5, wobei der zweite Bestandteil (12) drehbar an dem ersten Bestandteil (11) angebracht ist und das Stoppelement (15) den Auslenkwinkel des zweiten Bestandteils vom ersten Bestandteil auf 120-130 Grad beschränkt.

7. Anzeigevorrichtung für die Spannung gemäß Anspruch 6, wobei der maximal erlaubte Auslenkwinkel des zweiten Bestandteils (12) vom ersten Bestandteil (11) 125 Grad beträgt.

8. Anzeigevorrichtung für die Spannung gemäß einem der vorhergehenden Ansprüche, wobei der erste Bestandteil (11) eine im Wesentlichen ebene Form aufweist.

9. Anzeigevorrichtung für die Spannung gemäß einem der vorhergehenden Ansprüche, wobei der erste Bestandteil (11) vertieft ist, um den zweiten Bestandteil (12) aufzunehmen.

10. Anzeigevorrichtung für die Spannung gemäß einem der vorhergehenden Ansprüche, wobei der zweite Bestandteil (12) in Bezug auf den ersten Bestandteil (11) beweglich zwischen einer offenen und geschlossenen Stellung gelagert ausgebildet ist.

11. Anzeigevorrichtung für die Spannung gemäß Anspruch 10, wobei der zweite Bestandteil (12) derartig bewegbar ist, dass dieser in der geschlossenen Stellung im Wesentlichen bündig mit dem ersten Bestandteil (11) ist und in der offenen Stellung aus dem ersten Bestandteil herausragt.

12. Anzeigevorrichtung für die Spannung gemäß einem der vorhergehenden Ansprüche, wobei der erste Bestandteil (11) ein im Wesentlichen rechteckiges ebenes Gehäuse aufweist, an dessen einem Ende der zweite Bestandteil (12) drehbar gelagert ist, und der zweite Bestandteil in den ersten Bestandteil faltbar ist, wenn genügend Spannung auf den durch die Anzeigevorrichtung geführten Gurt aufgebracht wird.

13. Anzeigevorrichtung für die Spannung gemäß einem der vorhergehenden Ansprüche, wobei der erste Bestandteil (11) getrennte Öffnungen (5, 16) aufweist, die Eintritts- und Austrittsstellen für den Gurt definieren, und einen Grundkörper (6) zwischen den Öffnungen zur Aufnahme der Belastung eines darauf wirkenden Gurts umfasst.

14. Anzeigevorrichtung für die Spannung gemäß Anspruch 13, wobei das Gurtbefestigungsmittel (23) in der geschlossenen Stellung im Wesentlichen in der gleichen Ebene gelagert ist wie die Austritts/Eintrittsöffnung(en) (5, 16) des ersten Bestandteils (11).

15. Anzeigevorrichtung für die Spannung gemäß Anspruch 14, wobei das Zwangsmittel eine Feder ist.

## Revendications

1. Indicateur de tension pour une sangle (13), l'indicateur ayant une première partie (11) adaptée pour être portée par rapport à ladite sangle, une deuxième partie (12) fixée de façon mobile à ladite première partie, **caractérisé par** un moyen de fixation de sangle (23) sur ladite deuxième partie, dans lequel une boucle (17) de ladite sangle peut être fixée audit moyen de fixation de telle sorte que lorsqu'une tension est appliquée à ladite sangle, ladite boucle tire elle-même sur ledit moyen de fixation de sangle et fait que ladite deuxième partie se déplace par rapport à ladite première partie dans une première direction, et un moyen de poussée agissant entre lesdites première et deuxième parties pour forcer l'espacement desdites première et deuxième parties dans une direction opposée à ladite première direction de telle sorte que la position de ladite deuxième partie donne une indication de la tension dans ladite sangle.

2. Indicateur de tension selon la revendication 1, dans lequel la deuxième partie (12) est montée de façon pivotante sur la première partie (11).

3. Indicateur de tension selon la revendication 1 ou 2, dans lequel le moyen de fixation de sangle (23) comprend un élément de barre transversale.

4. Indicateur de tension selon l'une quelconque des revendications 1 à 3, dans lequel le moyen de fixation de sangle (23) est prévu à une certaine distance dans la plage de 10 mm à 60 mm du point de fixation de la deuxième partie (12) sur la première partie (11).

5. Indicateur de tension selon une quelconque revendication précédente, comprenant en outre un élément d'arrêt (15) pour limiter l'étendue de mouvement de la deuxième partie (12) par rapport à la première partie (11).

6. Indicateur de tension selon la revendication 5, dans lequel la deuxième partie (12) est montée de façon pivotante sur la première partie (11) et l'élément d'arrêt (15) limite l'angle de déflexion de la deuxième partie par rapport à la première partie à une valeur entre 120 et 130 degrés.

7. Indicateur de tension selon la revendication 6, dans lequel l'angle de déflexion maximum autorisé de la deuxième partie (12) par rapport à la première partie (11) est 125 degrés.

8. Indicateur de tension selon une quelconque revendication précédente, dans lequel la première partie (11) a une forme substantiellement plane.

9. Indicateur de tension selon une quelconque revendication précédente, dans lequel la première partie (11) a un renfoncement pour recevoir la deuxième partie (12).

10. Indicateur de tension selon une quelconque revendication précédente, dans lequel la deuxième partie (12) est montée de façon mobile par rapport à la première partie (11) entre des positions ouverte et fermée.

11. Indicateur de tension selon la revendication 10, dans lequel la deuxième partie (12) est mobile de façon à être substantiellement de niveau avec la première partie (11) dans ladite position fermée et à se projeter de la première partie dans ladite position ouverte.

12. Indicateur de tension selon une quelconque revendication précédente, dans lequel la première partie (11) comprend un corps plan substantiellement rectangulaire, la deuxième partie (12) étant montée de façon pivotante à une extrémité de celui-ci, la deuxième partie étant repliable à l'intérieur de la première partie, lorsqu'une tension suffisante est donnée à la sangle glissée à travers l'indicateur.

13. Indicateur de tension selon une quelconque revendication précédente, dans lequel la première partie (11) a des ouvertures (5, 16) séparées définissant des points d'entrée et de sortie pour la sangle à travers celles-ci, un élément de base (6) étant prévu entre lesdites ouvertures pour recevoir une charge provenant d'une sangle agissant sur celui-ci.

14. Indicateur de tension selon la revendication 13, dans lequel, dans la position fermée, le moyen de fixation de sangle (23) est positionné dans substantiellement le même plan que ladite ouverture ou lesdites ouvertures (5, 16) de sortie/d'entrée de la première partie (11).

15. Indicateur de tension selon la revendication 14, dans lequel ledit moyen de poussée est un ressort.
